# EUROPEAN PATENT SPECIFICATION

(11) **EP 0 881 569 B1**
(45) Date of publication and mention of the grant of the patent: **25.04.2007**
(21) Application number: 98100409.6
(22) Date of filing: 12.01.1998
(51) Int. Cl.: G06F 11/14, G06F 11/20

(54) **File system and file management method which realize distributed replication in system having shared type raid**
Dateiensystem und Dateienverwaltungsverfahren, die eine verteilte Replikation in einem System mit gemeinsamen RAID verwirklichen
Système de fichiers et méthode de gestion de fichiers qui réalisent une réplication distribuée dans un système ayant un RAID du type partagé

(30) Priority: 27.05.1997 JP 13684797
(43) Date of publication of application: 02.12.1998
(73) Proprietor: KABUSHIKI KAISHA TOSHIBA, Kawasaki-shi, Kanagawa 212-8572 (JP)
(72) Inventor: Hirayama, Hideaki, c/o K.K. Toshiba, Tokyo 105 (JP); Shirakihara, Toshio, c/o K.K. Toshiba, Tokyo 105 (JP)
(74) Representative: Henkel, Feiler & Hänzel

(56) References cited:
- EP-A- 0 441 087
- US-A- 5 271 013

## Description

The present invention relates to a file system and a file management method which can be suitably applied to a computer system serving as a duplex computer system constituted by a plurality of computers sharing a RAID (Redundant Arrays of Inexpensive Disks) and connected to each other through a network, and having a fault recovery function of a checkpoint/recovery scheme and, more particularly, to a file system and a file management method which can greatly increase the disk usage of the shared RAID.

A high reliability technique of realizing recovery from a fault is available. According to this technique, the address space and context of a process, the state of a file, and the like are periodically taken (checkpoint), and the system is restored to a state at the most recently taken checkpoint to restart the process at the occurrence of a fault, thus realizing recovery from the fault. A technique of applying the above technique to a duplex system (e.g., a hot-standby system) is also available. In this technique, a checkpoint taken by the primary (active) computer as one of the two computers is sent to the backup (standby) computer to allow both the primary and backup computers to perform recovery processing to restart a process from the checkpoint at the occurrence of a fault.

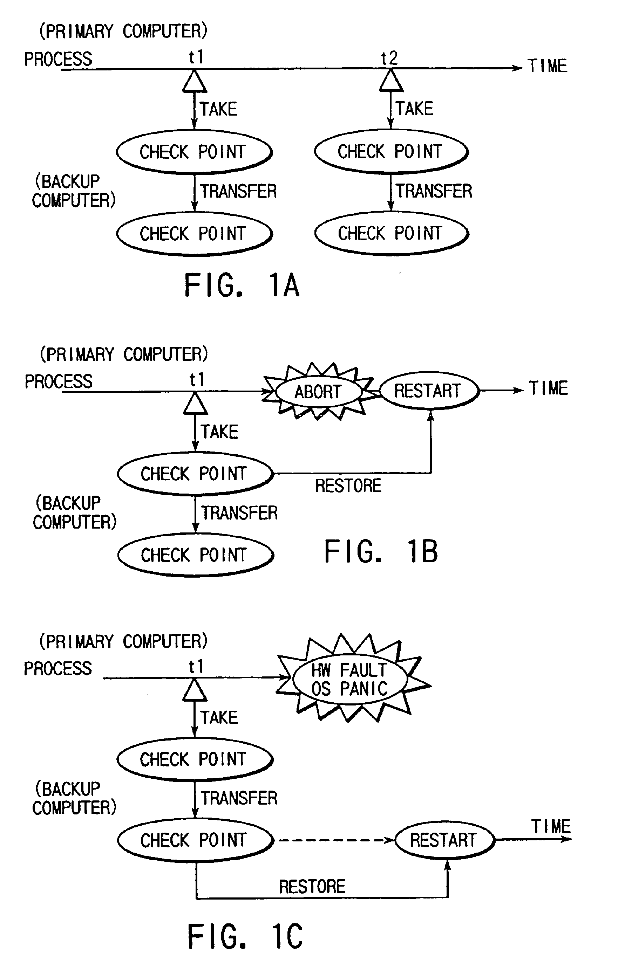

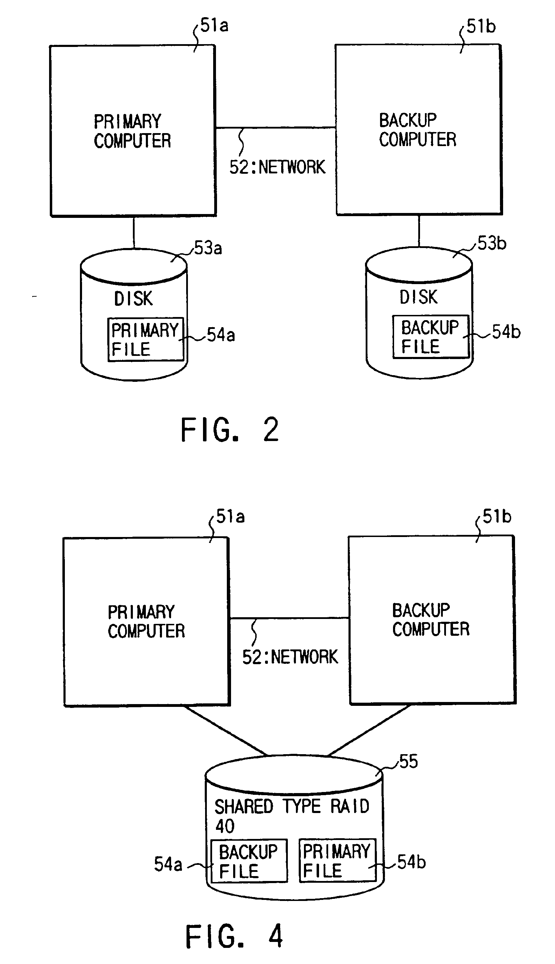

These techniques will be briefly described below with reference to FIGS. 1A through 1C. As shown in FIG. 1A, in this system, a checkpoint of a process is periodically taken while the process is executed by the primary computer, and the taken checkpoint is sent to the backup computer. In the system, when the currently executed process is aborted on the primary computer, the process is restarted from the checkpoint on the primary computer. FIG. 1B shows this state. When a fault is caused in the hardware or operating system of the primary computer, the process is restarted from a checkpoint on the backup computer. FIG. 1C shows this state. In these techniques, as disclosed in, for example, Japanese Patent Application No. 8-233021 and the like, a primary computer 51a and a backup computer 51b respectively have independent disks 53a and 53b, as shown in FIG. 2.

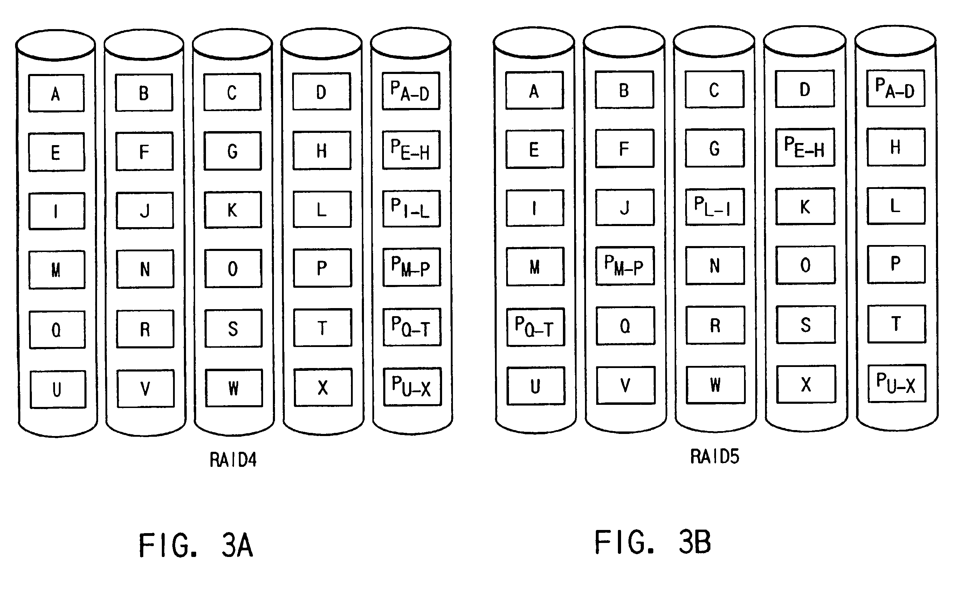

When such a duplex disk system is used, the disk usage becomes 50%. A RAID (Redundant Arrays of Inexpensive Disks) is available as a system for protecting data against disk faults without using a duplex disk system. This RAID is described in detail in "COMPUTER ARCHITECTURE A QUANTITATIVE APPROACH SECOND EDITION/JOHNL HENNESSY & DAVID PATTERSON" and the like. A RAID of level 4 or level 5 (RAID 4 or 5) uses five disks to provide a capacity of four disks from which data can be restored even if one of the disks is damaged ("PA-D" indicates parity data for restoring "A", "B", "C", and "D"), as shown in FIGS. 3A and 3B.

For example, a simple duplex disk system requires eight disks to provide a capacity of four disks (disk usage = 1/2 = 50%). According to the RAID 4 or 5, for example, since a capacity of four disks allowing data restoration can be provided by using five disks, the disk usage is higher than that of the duplex disk system (4/5 = 80%). The RAID 4 or 5 will be simply referred to as the RAID hereinafter unless otherwise specified.

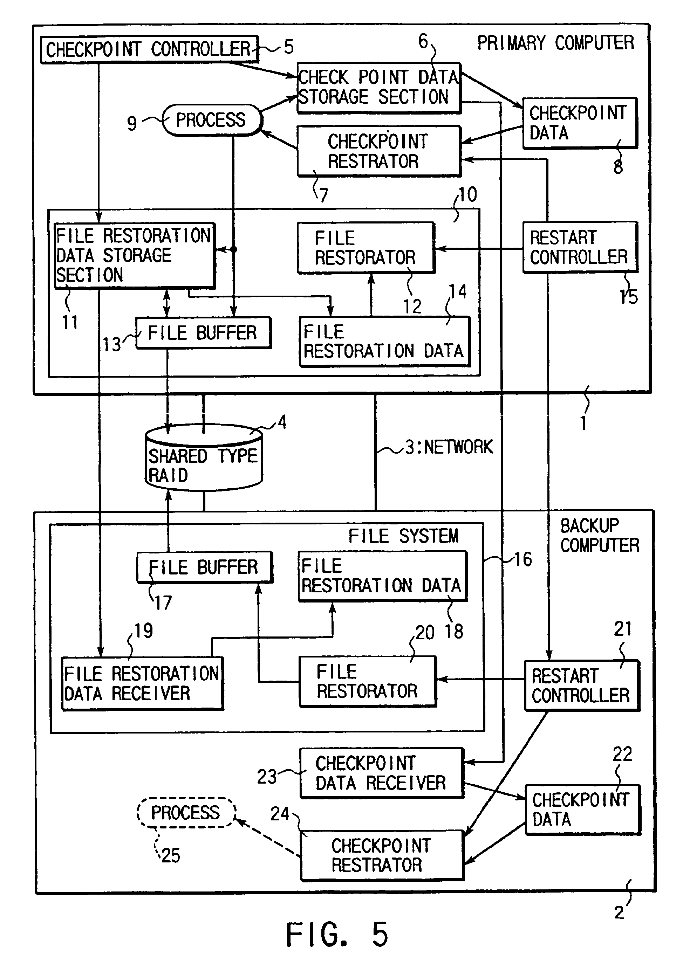

In the technique disclosed in Japanese Patent Application No. 8-233021 and the like, a method of using a RAID shared by primary and backup computers (to be referred to as a shared type RAID hereinafter) instead of using independent disks for the two computers can be expected. However, since the technique disclosed in Japanese Patent Application No. 8-233021 is based on the assumption that updating of a primary file is not reflected in a backup before a checkpoint, even if the primary and backup computers have a shared type RAID, a primary file 54a and a backup file 54b must be arranged on a shared type RAID 55, as shown in FIG. 4. With this duplex file system, the disk usage greatly deteriorates (disk usage = 4/5 × 1/2 = 40%).

If the high reliability technique of periodically taking a checkpoint including the address space and context of a process, the state of a file, and the like, and restarting the process by restoring the system to a state at the most recently taken checkpoint at the occurrence of a fault is applied to a duplex system (e.g., a hot-standby system), and if a shared type RAID is applied to a system in which both primary and backup computers can perform a recovery process of restarting a process from a checkpoint at the occurrence of a fault by sending the checkpoint taken in the primary computer as one of the two computers to the backup computer, the disk usage greatly deteriorates (e.g., disk usage = 4/5 x 1/2 = 40%).

EP 0 441 087 A discloses a checkpoint mechanism implemented in a data processing system comprising a dual processor configuration which gives the system a fault tolerance capability while minimizing the complexity of both the software and the hardware. The active and backup processors are coupled asynchronously with some hardware assist functions comprising a memory change detector which captures the memory changes in the memory of the active processor and a mirroring control circuit which causes the memory changes when committed by establish recovery point signals generated by the active processor to be dumped into the memory of the back up processor so that the backup processor can resume the operations of the active processor from the last established recovery point. The active and backup processors may each be connected to a dedicated memory and recovery point storing means, or to a memory including two dual sides shared by all the processors for storing data structures and recovery points.

US 5 271 013 A discloses a fault tolerant computer system which operates to automatically provide fault tolerant operation in a manner which reduces the frequency of checkpointing, while requiring neither simultaneity nor atomicity with respect to information transmitted to backups. These advantage are accomplished by providing operation such that message transmissions from primary tasks running on a data processor to external backups may be delayed until an action is performed which will persist after failure of the data processor. Although such operation may result in the backups hot having received all of the messages transmitted to their respective primary tasks when failure occurs, recovery is nevertheless obtained using the backups, since transmission to backups is controlled so that all backups agree on the state of the data processor at the time of failure, which need not be the actual state of the data processor at the time of failure.

It is an object of the present invention to provide a file system and a file management method which can increase the disk usage to that a shared type RAID essentially has even if the RAID is used for the above system.

According to the present invention the above object is achieved by a file system according to claim 1, a file management method according to 8, a computer readable recording medium according to claim 11. The dependent claims are directed to different advantageous aspects of the invention.

According to the present invention, for example, in a hot-standby system to which a fault recovery function based on a checkpoint/recovery scheme is applied, since a file on the RAID shared by the primary and backup computers can be restored to a state at the most recently taken checkpoint without using a duplex disk system, the usage of the shared type RAID can be greatly increased.

The present invention will now be described in more detail with reference to preferred embodiments of the invention, given only by way of example, and illustrated in the accompanying drawings in which:
FIGS. 1A through 1C are views for explaining a conventional duplex system to which the fault recovery function based on the checkpoint/recovery scheme is applied;
FIG. 2 is a view for explaining the file arrangement of a conventional duplex system to which the fault recovery function based on the checkpoint/recovery scheme is applied;
FIGS. 3A and 3B are views for explaining a RAID;
FIG. 4 is a view for explaining the file arrangement of a conventional duplex system to which the fault recovery function based on the checkpoint/recovery scheme is applied and a shared type RAID is applied;
FIG. 5 is a block diagram showing the system configuration of a computer system according to an embodiment of the present invention;
FIG. 6 is a view showing the principle of a file update operation in the computer system of this embodiment;
FIG. 7 is a view showing the principle of an operation to be performed when a process is to be restarted by a primary computer at the occurrence of a fault in the computer system of this embodiment;
FIG. 8 is a view showing the principle of an operation to be performed when a process is to be restarted by a backup computer at the occurrence of a fault in the computer system of this embodiment;
FIG. 9 is a flow chart showing the flow of a file update process performed by the primary computer of the computer system of this embodiment;
FIG. 10 is a flow chart showing the flow of a checkpoint process associated with a file operation in the primary computer of the computer system of this embodiment;
FIG. 11 is a flow chart showing the flow of a rollback process associated with a file operation to be performed when a process is to be restarted by the primary computer of the compute system of this embodiment;
FIG. 12 is a flow chart showing the flow of a rollback process associated with a file operation to be performed when a process is to be restarted by the backup computer of the computer system of this embodiment; and
FIG. 13 is a view showing a rollback process to be performed when access to a file on the shared type RAID of the computer system of this embodiment is made to perform only an append operation.

An embodiment of the present invention will be described below with reference to the views of the accompanying drawing.

FIG. 5 shows the system configuration of a computer system according to an embodiment of the present invention. As shown in FIG. 5, the computer system of this embodiment is a duplex system (e.g., hot-standby system) constituted by a primary computer 1 and a backup computer 2. The two computers are connected through a network 3. This system has a shared type RAID 4 which the two computers can access. When a process 9 is to perform a file operation while being executed by the primary computer 1, the process 9 accesses a file on the shared type RAID 4 through a file buffer 13 (called a buffer cache or the like in UNIX) managed by a file system 10 in the operating system.

When the process 9 is to update the file, a file restoration data storage section 11 reads data for restoring the file (for example, data before a write operation when the write operation is to be performed) from the file, and stores the data, together with the file name, the position, and the length, as file restoration data 14. The file restoration data storage section 11 transfers the file restoration data 14 to a file restoration data receiver 19 of the backup computer 2. Upon reception of the file restoration data 14, the file restoration data receiver 19 separately stores it as file restoration data 18.

A checkpoint controller 5 periodically requests taking of a checkpoint of the process 9. This checkpoint taking is sent from the checkpoint controller 5 to both a checkpoint data storage section 6 and the file restoration data storage section 11.

Upon reception of the checkpoint taking command from the checkpoint controller 5, the checkpoint data storage section 6 stores the address space of the process 9 and the processor context data as checkpoint data 8. The checkpoint data storage section 6 transfers the checkpoint data 8 to a checkpoint data receiver 23 of the backup computer 2. Upon reception of the checkpoint data 8, the checkpoint data receiver 23 separately stores it as checkpoint data 22.

Upon reception of the checkpoint taking command from the checkpoint controller 5, the file restoration data storage section 11 writes back the updated data, which is present in the file buffer 13 and has not been written back to the shared type RAID 4, to the shared type RAID 4, thereby reflecting the update operation in the shared type RAID 4. After reflection of this update operation is complete, the file restoration data 14 is cleared. The file restoration data storage section 11 also transfers this checkpoint taking command to the file restoration data receiver 19 of the backup computer 2. Upon reception of the checkpoint taking command, the file restoration data receiver 19 clears the file restoration data 18.

When the backup computer 2 is down, the checkpoint data storage section 6 and the file restoration data storage section 11 stop transferring the checkpoint data 8 and the file restoration data 14.

When the process 9 is aborted while being executed by the primary computer 1, and is to be restarted by the primary computer 1 from the most recently taken checkpoint, a restart controller 15 transmits a rollback process (a return to a state before the execution of a given transaction when processing on the transaction must be stopped for some reason) command to both a checkpoint restorator 7 and a file restorator 12.

Upon reception of the rollback process command from the restart controller 15, the checkpoint restorator 7 restarts the process 9 from the checkpoint taken time by using the checkpoint data 8. Upon reception of the rollback process command from the restart controller 15, the file restorator 12 restores the file to the state at the checkpoint by using the file restoration data 14.

Subsequently, the restart controller 15 notifies a restart controller 21 of the backup computer 2 that the file was rolled back. Upon reception of this notification, the restart controller 21 outputs a command to a file restorator 20 to clear the file restoration data 18.

When the primary computer 1 goes down because of a hardware fault, an operating system fault, or the like, and the process 9 is to be restarted by the backup computer 2 from the checkpoint, the restart controller 21 sends a rollback process command to both a checkpoint restorator 24 and the file restorator 20.

Upon reception of the rollback process command from the restart controller 21, the checkpoint restorator 24 restarts the process 9 as a process 25 from the checkpoint taken time by using the checkpoint data 22. Upon reception of the rollback process command from the restart controller 21, the file restorator 20 restores the file to the state at the checkpoint by using the file restoration data 18.

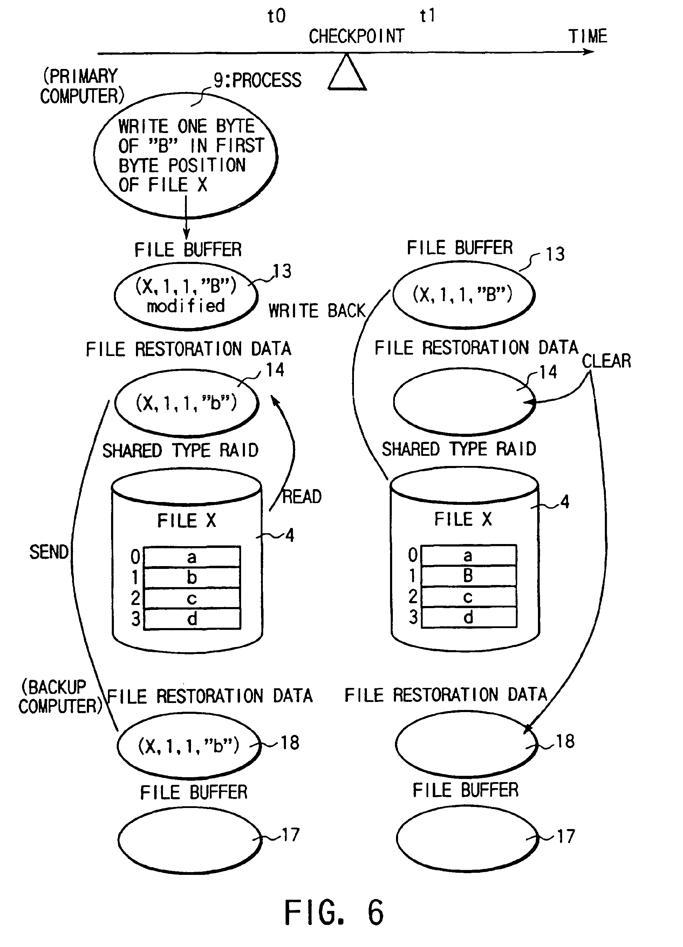

FIG. 6 shows the principle of a file update operation in the computer system of this embodiment.

At time t0, the process 9 writes one byte of "B" in the first byte position of a file X. Before this update operation, one-byte data is read from the first byte position of the file X and stored as the file restoration data 14. This data is also transferred to the backup computer 2 to be stored as the file restoration data 18.

At time t1, a checkpoint is taken. With this operation, the updated data, which is present in the file buffer 13 and has not been reflected in the shared type RAID 4, is written back to the shared type RAID 4. Thereafter, the file restoration data 14 in the primary computer 1 and the file restoration data 18 in the backup computer 2 are cleared.

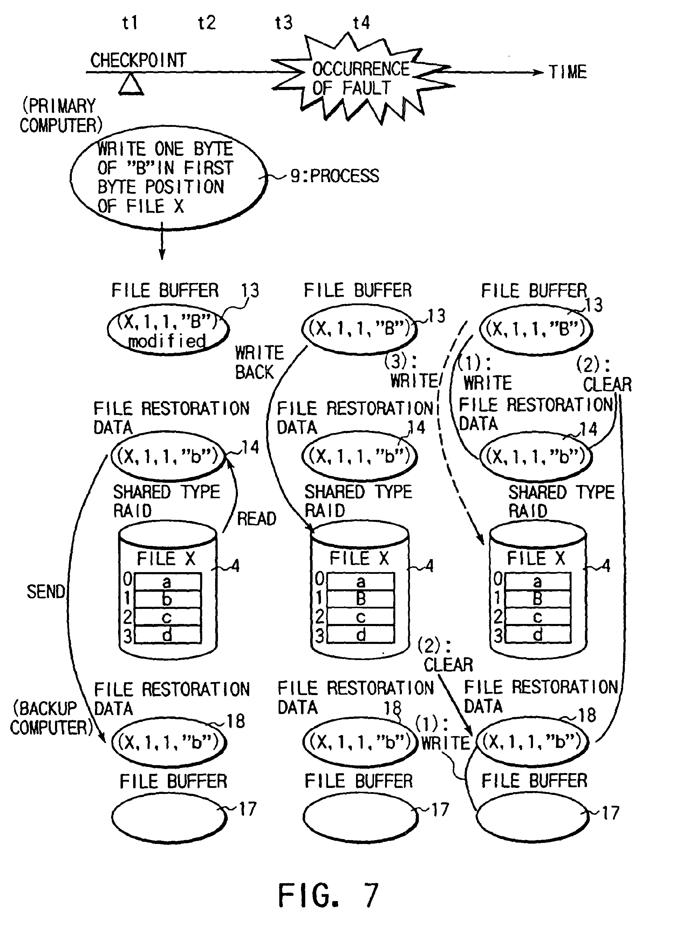

FIG. 7 shows the principle of an operation to be performed when a process is restarted by the primary computer at the occurrence of a fault in the computer system of this embodiment.

At time t1, a checkpoint is taken. Thereafter, at time t2, the process 9 writes one byte of "B" in the first byte position of the file X. Before this update operation, one-byte data is read from the first byte position of the file X and stored as the file restoration data 14. This data is also transferred to the backup computer 2 to be stored as the file restoration data 18.

Subsequently, at time t3, the updated data in the file buffer 13 is written back to the shared type RAID 4. At time t4, a fault occurs, and the process 9 is started by the primary computer 1. For this purpose, both the primary computer 1 and the backup computer 2 must perform rollback to restore the file X to the state at the checkpoint. To do this operation, it suffices to (1) write the data stored as the file restoration data 14 in the file buffer 13 and (2) clear the file restoration data 14 and the file restoration data 18. At this time point, the data in the file X on the shared type RAID 4 has not been rolled back. No problem, however, is posed because the data has been rolled back on the file buffer 13 which is accessed beforehand. The data in the file X on the shared type RAID 4 is written back from the file buffer 13 afterward. This data, however, may be forcibly written back at this time point.

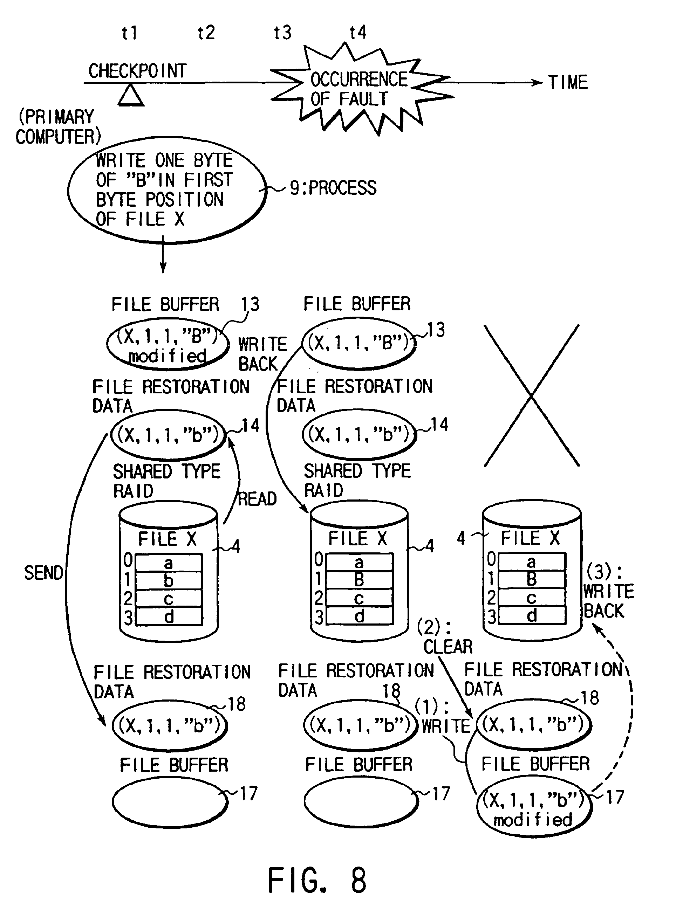

FIG. 8 shows the principle of an operation to be performed when a process is to be restarted by the backup computer at the occurrence of a fault in the computer system of this embodiment.

First of all, at time t1, a checkpoint is taken. At time t2, the process 9 writes one byte of "B" in the first byte position of the file X. Before this update operation, one-byte data is read from the first byte position of the file X and stored as the file restoration data 14. This data is also transferred to the backup computer 2 to be stored as the file restoration data 18.

Subsequently, at time t3, the updated data in the file buffer 13 is written back to the shared type RAID 4. At time t4, a fault occurs, and the process 9 is restarted by the backup computer. For this purpose, the backup computer 2 must perform a rollback process to restore the file X to the state at the checkpoint. To do this operation, it suffices to (1) write the data stored as the file restoration data 18 in a file buffer 17 and (2) clear the file restoration data 18. At this time point, the data in the file X on the shared type RAID 4 has not been rolled back. No problem, however, is posed because the data has been rolled back on the file buffer 17 which is accessed beforehand. The data in the file X on the shared type RAID 4 is written back from the file buffer 17 afterward. This data, however, may be forcibly written back at this time point.

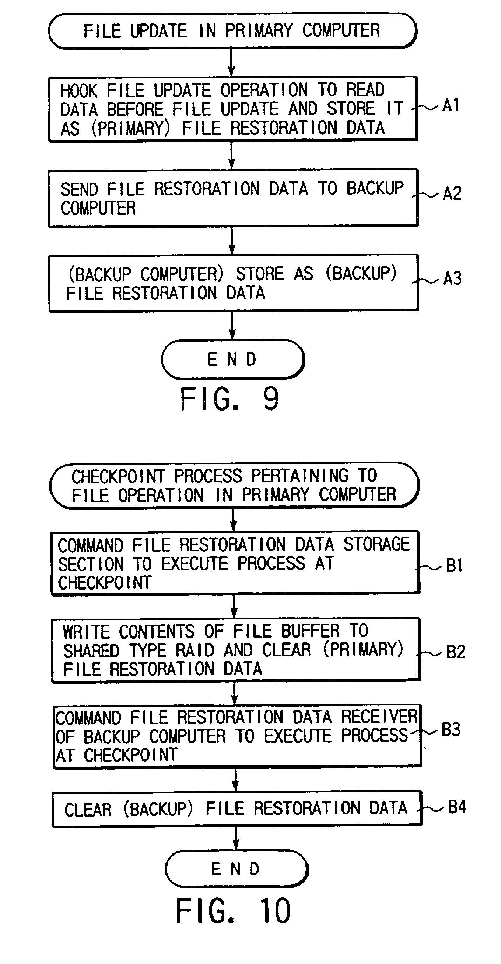

FIG. 9 shows the flow of file update processing performed by the primary computer in the computer system of this embodiment.

The file restoration data storage section 11 hooks a file update operation performed by the process 9 to read data before the file update operation and store the data as the file restoration data 14 (step A1). The file restoration data storage section 11 also transmits the file restoration data 14 to the backup computer 2 (step A2). The file restoration data 14 sent to the backup computer 2 is received by the file restoration data receiver 19 and stored as the file restoration data 18 (step A3).

FIG. 10 shows the flow of a checkpoint process associated with a file operation performed by the primary computer in the computer system of this embodiment.

The checkpoint controller 5 commands the file restoration data storage section 11 to execute a process at the checkpoint (step B1). The file restoration data storage section 11 writes back the file buffer 13 to the shared type RAID 4 and clears the file restoration data 14 (step B2). In addition, the file restoration data storage section 11 commands the file restoration data receiver 19 of the backup computer 2 to execute a process at the checkpoint (step B3). Upon reception of this command, the file restoration data receiver 19 clears the file restoration data 18 (step B4).

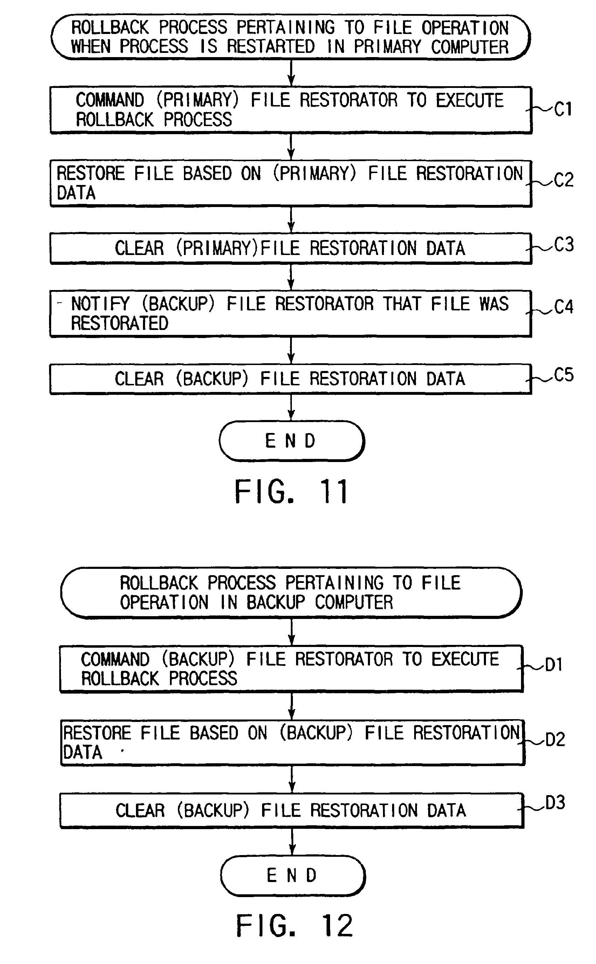

FIG. 11 shows the flow of a rollback process associated with a file operation to be performed when a process is to be restarted by the primary computer in the computer system of this embodiment.

The restart controller 15 of the primary computer 1 commands the file restorator 12 to execute a rollback process (step C1). The file restorator 12 restores the file on the basis of the file restoration data 14 (step C2), and then clears the file restoration data 14 (step C3).

The restart controller 15 notifies the file restorator 20 through the restart controller 21 of the backup computer 2 that the file was restored (step C4). Upon reception of this notification, the file restorator 20 clears the file restoration data 18 (step C5).

FIG. 12 shows the flow of a rollback process associated with a file operation to be performed when a process is to be restarted by the backup computer of the computer system of this embodiment.

The restart controller 21 of the backup computer 2 commands the file restorator 20 to execute a rollback process (step D1). The file restorator 20 restores the file on the basis of the file restoration data 18 (step D2), and then clears the file restoration data 18 (step D3).

The above description is based on the assumption that all the accesses to the files are made through the file buffer 13 or the file buffer 17. The shared type RAID 4, however, may be directly accessed (for example, RAW I/O in UNIX) without the mediacy of the file buffer 13 or the file buffer 17. In this case, data in the file buffer 13 or the file buffer 17 need not be written back to the shared type RAID 4 in a checkpoint process.

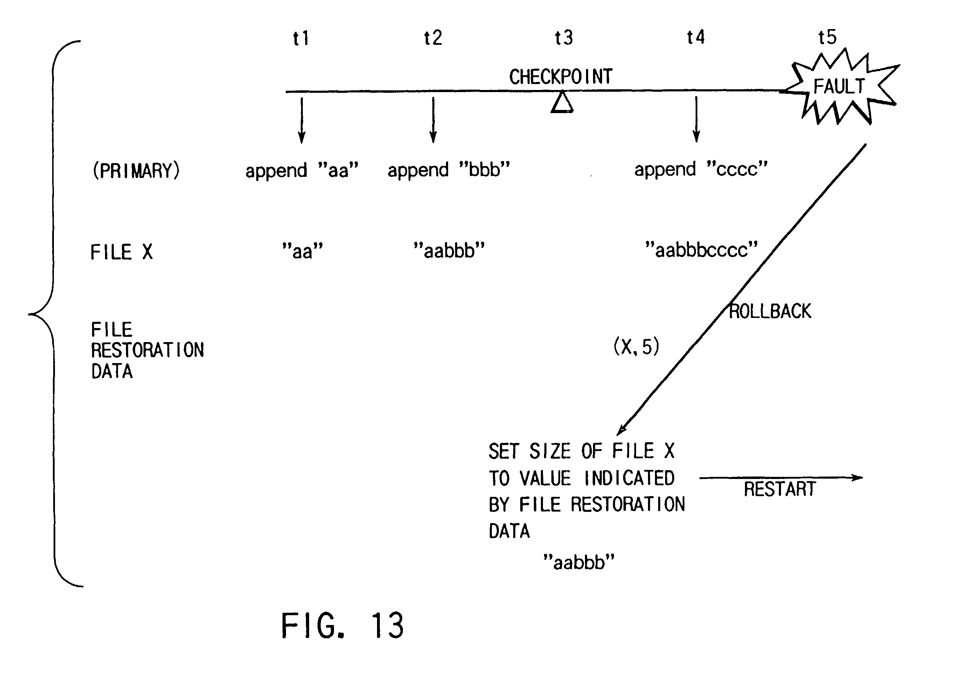

When access to a file on the shared type RAID 4 is made to perform an append operation, file restoration data need not be stored in a file update operation. Instead of this operation, it suffices to hold the size of the file as the file restoration data 14 on the primary computer 1 at the checkpoint taken time and also transfer it to the backup computer 2 so as to store it as the file restoration data 18 on the backup computer 2. This is because, when a process is aborted, the file can be restored to the state at the checkpoint taken time by resetting the file size to the size stored at the checkpoint taken time on the basis of the file restoration data 14 held on the primary computer 1. Similarly, when the primary computer 1 goes down owing to a hardware fault, an operating system fault, or the like, the file can be restored to the state at the checkpoint taken time by resetting the file size to the size stored at the checkpoint taken time on the basis of the file restoration data 18 held on the backup computer 2. FIG. 13 shows the operation in such a case. Assume that only an append operation is performed for the file X.

At time t1, "aa" is appended to the file X. At time t2, "bbb" is appended to the file X. At time t3, a checkpoint is taken, and data indicating that the size of the file X is "5" is stored as the file restoration data 14.

At time t4, "ccc" is appended to the file X. At time t5, a fault occurs, and hence the file is rolled back to the state at the checkpoint taken at time t3. In this case, the file X is restored to the state at the checkpoint by setting the file size to "5" on the basis of the file restoration data 14.

For example, a journal file (log file) is a file for which only an append operation is performed.

In the above embodiment, only "write" and "append" are described as file update operations, and only "data before write operation" and "file size before append operation" are described as file restoration data. However, file directory operations such as "file creation" and "file deletion" may also be performed as file update operations. In this case, as file restoration data, for example, "file deletion" and "all data before file creation/deletion" are used.

When transfer of checkpoint data and file restoration data by the checkpoint data storage section 6 and the file restoration data storage section 11 is stopped due to a fault in the backup computer 2, a computer other than the backup computer 2 may be used as a substitute for the backup computer 2, and the checkpoint data storage section 6 and the file restoration data storage section 11 may transfer the checkpoint data and the file restoration data to this computer as the substitute. With this operation, a further improvement in reliability can be attained.

The file management method in the above embodiment can be stored, as programs which can be executed by a computer, in recording media such as magnetic tapes, optical disks, and semiconductor memories to be distributed.

## Claims

1. A file system applied to a computer system serving as a duplex computer system constituted by two computers, active and standby computers, sharing a RAID, and having a fault recovery function of periodically taking a checkpoint from which execution of an interrupted process is restarted, and restarting the execution of the interrupted process by restoring said system to a state at a most recently taken checkpoint at occurrence of a fault, comprising:
first file restoration data holding means (11) for reading data before an update operation from the file, when a command for updating a file on said RAID is output from a currently executed process, and holding the readout data before the update operation, together with a file name, an update position, and an update size, on said active computer as file restoration data for restoring the file to a state at a most recently taken checkpoint;
file restoration data transfer means (11, 19) for transferring the held file restoration data to said standby computer;
second file restoration data holding means (19, 18) for receiving the transferred file restoration data and holding the data on said standby computer; and
checkpoint process means (12, 20) for discarding the file restoration data held by said first and second file restoration data holding means when a checkpoint is taken, and
further comprising a file restoration means (12, 20) for restoring a file to a state at a most recently taken checkpoint on the basis of file restoration data held by said first file restoration data holding means, when a process is aborted, and discarding the file restoration data held by said first and second file restoration data holding means after the file is restored.

2. A system according to claim 1, further comprising file restoration means (20) for restoring a file to a state at a most recently taken checkpoint on the basis of file restoration data held by said second file restoration data holding means (18), when said active computer stops at occurrence of a hardware fault or an operating system fault, and discarding the file restoration data held by said second file restoration data holding means after the file is restored.

3. A file system according to any of claims 1 and 2 wherein:
said first file restoration data holding means (11) includes means for acquiring a size of a file held on said RAID and subjected to only an append update operation, when a checkpoint is taken, and holding the acquired size as file restoration data for restoring the file to a state at a most recently taken checkpoint in a case where the append update operation is performed;
said file restoration data transfer means (11, 19) includes means for transferring the held file restoration data indicative of the size to said standby computer; and
said second file restoration data holding means (18) includes means for receiving the transferred file restoration data indicative of the size and holding the data on said standby computer.

4. A file system according to claim 3, further comprising file restoration means (14, 12) for resetting a size of a file to a size at a most recently taken checkpoint on the basis of file restoration data held by said first file restoration data holding means when a process is aborted.

5. A system according to claim 3, further comprising file restoration means (18, 20) for resetting a size of a file to a size at a most recently taken checkpoint on the basis of file restoration data held by said second file restoration data holding means when said active computer stops at occurrence of a hardware fault or an operating system fault.

6. A system according to any of claims 1 to 5, wherein said file restoration data transfer means comprises means (6, 11) for stopping transfer of the file restoration data indicative of the size to said standby computer when said standby computer stops at occurrence of a hardware fault or an operating system fault.

7. A system according to claim 6, wherein said file restoration data transfer means further comprises means (3) for transferring the file restoration data indicative of the size to another computer other than said active and standby computers sharing said RAID when transfer of the file restoration data to said standby computer is stopped, and third file restoration data holding means for receiving the transferred file restoration data indicative of the size and holding the data on said another computer.

8. A file management method applied to a computer system serving as a duplex computer system constituted by two computers, active and standby computers, sharing a RAID, and having a fault recovery function of periodically taking a checkpoint from which execution of an interrupted process is restarted, and restarting the execution of the interrupted process by restoring said system to a state at a most recently taken checkpoint at occurrence of a fault, comprising:
the step of reading data before an update operation from the file, when a command for updating a file on said RAID is output from a currently executed process, and holding the readout data before the update operation, together with a file name, an update position, and an update size, on said active computer as file restoration data for restoring the file to a state at a most recently taken checkpoint;
the step of transferring the held file restoration data to said standby computer;
the step of receiving the transferred file restoration data and holding the data on said standby computer;
the step of discarding the file restoration data held on said active and standby computers when a checkpoint is taken; and
the step of restoring the file to a state at a most recently taken checkpoint on the basis of file restoration data held on said active computer, when the process is aborted, and discarding the file restoration data held on said active and standby computers after the file is restored.

9. A file management method according to claim 8, comprising:
the step of restoring the file to a state at a most recently taken checkpoint on the basis of file restoration data held on said standby computer, when said active computer stops at occurrence of a hardware fault or an operating system fault, and discarding the file restoration data held on said standby computer after the file is restored.

10. A file management method according to claim 8, comprising:
the step of acquiring a size of a file held on said RAID and subjected to only an append update operation, when a checkpoint is taken, and holding the acquired size as file restoration data for restoring the file to a state at a most recently taken checkpoint in a case where the append update operation is performed;
the step of transferring the held file restoration data indicative of the size to said standby computer; and
the step of receiving the transferred file restoration data indicative of the size and holding the data on said standby computer; and
the step of resetting the size of the file to a size at a most recently taken checkpoint on the basis of file restoration data indicative of the size held on said active computer when the process is aborted.

11. A computer-readable recording medium storing a program applied to a computer system serving as a duplex computer system constituted by two computers, active and standby computers, sharing a RAID, and having a fault recovery function of periodically taking a checkpoint from which execution of an interrupted process is restarted, and restarting the execution of the interrupted process by restoring said system to a state at a most recently taken checkpoint at occurrence of a fault,
said program causing said computer system to read data before an update operation from the file, when a command for updating a file on said RAID is output from a currently executed process, and hold the readout data before the update operation, together with a file name, an update position, and an update size, on said active computer as file restoration data for restoring the file to a state at a most recently taken checkpoint,
transfer the held file restoration data to said standby computer,
receive the transferred file restoration data, and hold the data on said standby computer;
discard the file restoration data held on said active and standby computers when a checkpoint is taken,
restore the file to a state at a most recently taken checkpoint on the basis of file restoration data held on said active computer, when the process is aborted, and discard the file restoration data held on said active and standby computers after the file is restored.

12. A computer-readable recording medium according to claim 11, wherein,
said program causes restore the file to a state at a most recently taken checkpoint on the basis of file restoration data held on said standby computer, when said active computer stops at occurrence of a hardware fault or an operating system fault, and discard the file restoration data held on said standby computer after the file is restored.

13. A computer-readable recording medium according to claim 11 wherein
said program causes said computer system to acquire a size of a file held on said RAID and subjected to only an append update operation, when a checkpoint is taken, and hold the acquired size as file restoration data for restoring the file to a state at a most recently taken checkpoint in a case where the append update operation is performed,
transfer the held file restoration data indicative of the size to said standby computer,
receive the transferred file restoration data indicative of the size, and hold the data on said standby computer, and
restore the size of the file to a size at a most recently taken checkpoint on the basis of file restoration data indicative of the size held on said active computer when the process is aborted.

14. A computer-readable recording medium according to claim 13, wherein said program causes said computer system to reset the size of the file to a size at a most recently taken checkpoint on the basis of file restoration data indicative of the size held on said standby computer when said active computer stops at occurrence of a hardware fault or an operating system fault.

## Patentansprüche

1. Dateisystem, das auf ein Computersystem angewendet wird, das als ein Doppel-Computersystem dient und durch zwei Computer, einen aktiven und einen Reserve-Computer, gebildet wird, die ein RAID gemeinsam benutzen, und das eine Fehlerbeseitigungsfunktion zum periodischen Nehmen eines Checkpoints bzw. Neustartpunkts aufweist, von dem die Ausführung eines unterbrochenen Prozesses erneut gestartet werden kann, und zum Neu-Starten der Ausführung des unterbrochenen Prozesses durch Wiederherstellen des Systems in einen Zustand bei einem zuletzt genommenen Checkpoint bei Auftreten eines Fehlers, mit:
einem ersten Dateiwiederherstellungs-Datenhaltemittel (11) zum Lesen von Daten vor einem Aktualisierungsvorgang aus der Datei, wenn ein Befehl zum Aktualisieren einer Datei auf dem RAID von einem aktuell ausgeführten Prozess ausgegeben wird, und zum Halten der ausgelesenen Daten vor dem Aktualisierungsvorgang zusammen mit einem Dateinamen, einer Aktualisierungsposition und einer Aktualisierungsgröße auf dem aktiven Computer als Dateiwiederherstellungsdaten zum Wiederherstellen der Datei in einen Zustand bei einem zuletzt genommenen Checkpoint;
einem Dateiwiederherstellungs-Datentransfermittel (11, 19) zum Transferieren der gehaltenen Dateiwiederherstellungsdaten zu dem Reserve-Computer;
einem zweiten Dateiwiederherstellungs-Datenhaltemittel (19, 18) zum Aufnehmen der transferierten Dateiwiederherstellungsdaten und Halten der Daten auf dem Reserve-Computer; und
einem Checkpoint-Verarbeitungssmittel (12, 20) zum Verwerfen der durch das erste und zweite Wiederherstellungs-Datenhaltemittel gehaltenen Dateiwiederherstellungsdaten, wenn ein Checkpoint genommen wird, und
ferner mit einem Dateiwiederherstellungsmittel (12, 20) zum Wiederherstellen einer Datei in einen Zustand bei einem zuletzt genommenen Checkpoint auf der Grundlage der durch das erste Dateiwiederherstellungs-Datenhaltemittel gehaltenen Dateiwiederherstellungsdaten, wenn ein Prozess abgebrochen wird, und Verwerfen der durch das erste und zweite Dateiwiederherstellungs-Datenhaltemittel gehaltenen Dateiwiederherstellungsdaten, nachdem die Datei wiederhergestellt ist.

2. System gemäß Anspruch 2, ferner mit einem Dateiwiederherstellungsmittel (20) zum Wiederherstellen einer Datei in einen Zustand bei einem zuletzt genommenen Checkpoint auf der Grundlage der durch das zweite Datenwiederherstellungs-Datenmittel (18) gehaltenen Dateiwiederherstellungsdaten, wenn der aktive Computer bei Auftreten eines Hardware-Fehlers oder eines Betriebssystemfehlers stoppt, und zum Verwerfen der durch das zweite Dateiwiederherstellungs-Datenhaltemittel gehaltenen Dateiwiederherstellungsdaten, nachdem die Datei wiederhergestellt ist.

3. Dateisystem gemäß einem der Ansprüche 1 und 2, bei dem:
das erste Dateiwiederherstellungs-Datenhaltemittel (11) ein Mittel zum Erfassen einer Größe einer Datei, die auf dem RAID gehalten und lediglich einem Anfügungs-Aktualisierungsvorgang unterzogen wird, wenn ein Checkpoint genommen wird, und zum Halten der erfassten Größe als Dateiwiederherstellungsdaten zum Wiederherstellen der Datei in einen Zustand bei einem zuletzt genommenen Checkpoint in einem Fall, in dem der Hinzufügungs-Aktualisierungsvorgang durchgeführt wird, aufweist;
wobei das Dateiwiederherstellungs-Datentransfermittel (11, 19) ein Mittel zum Transferieren der gehaltenen Dateiwiederherstellungsdaten, die die Größe angeben, zu dem Reserve-Computer aufweist; und
wobei das zweite Dateiwiederherstellungs-Datenhaltemittel (18) ein Mittel zum Aufnehmen der transferierten Dateiwiederherstellungsdaten, die die Größe angeben, und zum Halten der Daten auf dem Reserve-Computer aufweist.

4. Dateisystem gemäß Anspruch 3, ferner mit einem Dateiwiederherstellungsmittel (14, 12) zum Zurücksetzen einer Größe einer Datei auf eine Größe bei einem zuletzt genommenen Checkpoint auf der Grundlage von Dateiwiederherstellungsdaten, die durch das erste Dateiwiederherstellungs-Datenhaltemittel gehalten werden, wenn ein Prozess abgebrochen wird.

5. System gemäß Anspruch 3, ferner mit einem Dateiwiederherstellungsmittel (18, 20) zum Zurücksetzen einer Größe einer Datei auf eine Größe bei einem zuletzt genommenen Checkpoint auf der Grundlage von Dateiwiederherstellungsdaten, die durch das zweite Dateiwiederherstellungs-Datenhaltemittel gehalten werden, wenn der aktive Computer bei Auftreten eines Hardware-Fehlers oder eines Betriebssystemfehlers stoppt.

6. System gemäß einem der Ansprüche 1 bis 5, bei dem das Dateiwiederherstellungs-Datentransfermittel Mittel (6, 11) zum Stoppen des Transfers der Dateiwiederherstellungsdaten, die die Größe angeben, zu dem Reserve-Computer umfasst, wenn der Reserve-Computer bei Auftreten eines Hardware-Fehlers oder eines Betriebssystemfehlers stoppt.

7. System gemäß Anspruch 6, bei dem das Dateiwiederherstellungs-Datentransfermittel ferner umfasst:
ein Mittel (3) zum Transferieren der Dateiwiederherstellungsdaten, die die Größe angeben, zu einem anderen Computer verschieden von dem aktiven und dem Reserve-Computer, die das RAID gemeinsam nutzen, wenn der Transfer der Dateiwiederherstellungsdaten zu dem Reserve-Computer gestoppt ist, und
ein drittes Dateiwiederherstellungs-Datenhaltemittel zum Aufnehmen der transferierten Dateiwiederherstellungsdaten, die die Größe angeben, und zum Halten der Daten auf dem anderen Computer.

8. Dateimanagementverfahren, das auf ein Computersystem angewendet wird, das als ein Doppel-Computersystem dient und durch zwei Computer, einen aktiven und einen Reserve-Computer, gebildet wird, die ein RAID gemeinsam benutzen, und das eine Fehlerbeseitigungsfunktion zum periodischen Nehmen eines Checkpoints aufweist, von dem die Ausführung eines unterbrochenen Prozesses erneut gestartet wird, und das die Ausführung des unterbrochenen Prozesses durch Wiederherstellen des Systems in einen Zustand bei einem zuletzt genommenen Checkpoint bei Auftreten eines Fehlers erneut starten, mit:
dem Schritt des Lesens von Daten vor einem Aktualisierungsvorgang aus der Datei, wenn ein Befehl zum Aktualisieren einer Datei auf dem RAID von einem aktuell ausgeführten Prozess ausgegeben wird, und des Haltens der ausgelesenen Daten vor dem Aktualisierungsvorgang zusammen mit einem Dateinamen, einer Aktualisierungsposition und einer Aktualisierungsgröße auf dem aktiven Computer als Dateiwiederherstellungsdaten zum Wiederherstellen der Datei in einen Zustand bei einem zuletzt genommenen Checkpoint;
dem Schritt des Transferierens der gehaltenen Dateiwiederherstellungsdaten zu dem Reserve-Computer;
dem Schritt des Aufnehmens der transferierten Dateiwiederherstellungsdaten und des Haltens der Daten auf dem Reserve-Computer; und
dem Schritt des Verwerfens der auf dem aktiven und Reserve-Computer gehaltenen Dateiwiederherstellungsdaten, wenn ein Checkpoint genommen wird, und
dem Schritt des Wiederherstellens einer Datei in einen Zustand bei einem zuletzt genommenen Checkpoint auf der Grundlage der auf dem aktiven Computer gehaltenen Dateiwiederherstellungsdaten, wenn der Prozess abgebrochen wird, und des Verwerfens der auf dem aktiven und Reserve-Computer gehaltenen Dateiwiederherstellungsdaten, nachdem die Datei wiederhergestellt ist.

9. Dateimanagementverfahren gemäß Anspruch 8, mit:
dem Schritt des Wiederherstellens der Datei in einen Zustand bei einem zuletzt genommenen Checkpoint auf der Grundlage der auf dem Reserve-Computer gehaltenen Dateiwiederherstellungsdaten, wenn der aktive Computer bei Auftreten eines Hardware-Fehlers oder eines Betriebssystemfehlers stoppt, und des Verwerfens der auf dem Reserve-Computer gehaltenen Dateiwiederherstellungsdaten, nachdem die Datei wiederhergestellt ist.

10. Dateimanagementverfahren gemäß Anspruch 8, mit:
dem Schritt des Erfassens einer Größe einer Datei, die auf dem RAID gehalten und lediglich einem Anfügungs-Aktualisierungsvorgang unterzogen wird, wenn ein Checkpoint genommen wird, und des Haltens der erfassten Größe als Dateiwiederherstellungsdaten zum Wiederherstellen der Datei in einen Zustand bei einem zuletzt genommenen Checkpoint in einem Fall, in dem der Hinzufügungs-Aktualisierungsvorgang durchgeführt wird;
dem Schritt des Transferierens der gehaltenen Dateiwiederherstellungsdaten, die die Größe angeben, zu dem Reserve-Computer; und
dem Schritt des Aufnehmens der transferierten Dateiwiederherstellungsdaten, die die Größe angeben, und des Haltens der Daten auf dem Reserve-Computer; und
dem Schritt des Zurücksetzen der Größe der Datei auf eine Größe bei einem zuletzt genommenen Checkpoint auf der Grundlage von Dateiwiederherstellungsdaten, die die Größe angeben, die auf dem aktiven Computer gehalten werden, wenn der Prozess abgebrochen wird.

11. Computer-lesbares Aufzeichnungsmedium, das ein Programm speichert, das auf ein Computersystem angewendet wird, das als ein Doppel-Computersystem dient und durch zwei Computer, einen aktiven und einen Reserve-Computer, gebildet wird, die ein RAID gemeinsam benutzen, und das eine Fehlerbeseitigungsfunktion zum periodischen Nehmen eines Checkpoints bzw. Haltepunkts aufweist, von dem die Ausführung eines unterbrochenen Prozesses erneut gestartet wird, und das die Ausführung des unterbrochenen Prozesses durch Wiederherstellen des Systems in einen Zustand bei einem zuletzt genommenen Checkpoint bei Auftreten eines Fehlers, erneut startet,
wobei das Programm das Computersystem veranlasst, Daten vor einem Aktualisierungsvorgang aus der Datei zu lesen, wenn ein Befehl zum Aktualisieren einer Datei auf dem RAID von einem aktuell ausgeführten Prozess ausgegeben wird, und die ausgelesenen Daten vor dem Aktualisierungsvorgang zusammen mit einem Dateinamen, einer Aktualisierungsposition und einer Aktualisierungsgröße auf dem aktiven Computer als Dateiwiederherstellungsdaten zum Wiederherstellen der Datei in einen Zustand bei einem zuletzt genommenen Checkpoint zu halten;
die gehaltenen Dateiwiederherstellungsdaten zu dem Reserve-Computer zu transferieren,
die transferierten Dateiwiederherstellungsdaten aufzunehmen und die Daten auf dem Reserve-Computer zu halten; und
die auf dem aktiven und Reserve-Computer gehaltenen Dateiwiederherstellungsdaten zu verwerfen, wenn ein Checkpoint genommen wird, und
die Datei in einen Zustand bei einem zuletzt genommenen Checkpoint auf der Grundlage der auf dem aktiven Computer gehaltenen Dateiwiederherstellungsdaten wiederherzustellen, wenn ein Prozess abgebrochen wird, und die auf dem aktiven und Reserve-Computer gehaltenen Dateiwiederherstellungsdaten zu verwerfen, nachdem die Datei wiederhergestellt ist.

12. Computer-lesbares Aufzeichnungsmedium gemäß Anspruch 11, bei dem
das Programm veranlasst, die Datei in einen Zustand bei einem zuletzt genommenen Checkpoint auf der Grundlage von auf dem Reserve-Computer gehaltenen Dateiwiederherstellungsdaten wiederherzustellen, wenn der aktive Computer bei Auftreten eines Hardware-Fehlers oder eines Betriebssystemfehlers stoppt, und die auf dem Reserve-Computer gehaltenen Dateiwiederherstellungsdaten zu verwerfen, nachdem die Datei wiederhergestellt ist.

13. Computer-lesbares Aufzeichnungsmedium gemäß Anspruch 11, bei dem
das Programm das Computersystem veranlasst, eine Größe einer Datei zu erfassen, die auf dem RAID gehalten wird und lediglich einem Hinzufügungsaktualisierungsvorgang unterzogen wird, wenn ein Checkpoint genommen wird, und die erfasste Größe als Dateiwiederherstellungsdaten zum Wiederherstellen der Datei in einen Zustand bei einem zuletzt genommenen Checkpoint in einem Fall zu halten, in dem der Hinzufügungsaktualisierungsvorgang durchgeführt wird,
die gehaltenen Dateiwiederherstellungsdaten, die die Größe angeben, zu dem Reserve-Computer zu transferieren;
die transferierten Dateiwiederherstellungsdaten, die die Größe angeben, aufzunehmen und die Daten auf dem Reserve-Computer zu halten, und
die Größe der Datei in eine Größe bei einem zuletzt genommenen Checkpoint auf der Grundlage der Dateiwiederherstellungsdaten wiederherzustellen, die die Größe angeben, die auf dem aktiven Computer gehalten werden, wenn der Prozess abgebrochen wird.

14. Computer-lesbares Aufzeichnungsmedium gemäß Anspruch 11, bei dem
das Programm das Computersystem veranlasst, die Größe der Datei auf eine Größe bei einem zuletzt genommenen Checkpoint auf der Grundlage von Dateiwiederherstellungsdaten zurückzusetzen, die die Größe angeben, die auf dem Reserve-Computer gehalten werden, wenn der aktive Computer bei Auftreten eines Hardware-Fehlers oder eines Betriebssystemfehlers stoppt.

## Revendications

1. Système de fichiers appliqué à un système d'ordinateurs jouant le rôle de système d'ordinateurs duplex qui est constitué par deux ordinateurs, soit des ordinateurs actif et en attente, partageant un RAID et présentant une fonction de restauration de défaillance consistant à prendre périodiquement un point de contrôle depuis lequel une exécution d'un processus abandonné est redémarrée, et redémarrant l'exécution du processus abandonné en restaurant ledit système dans un état au niveau d'un point de contrôle pris le plus récemment lors de la survenue d'une défaillance, comprenant :
un premier moyen de contenance de données de restauration de fichier (11) pour lire des données avant une opération de mise à jour à partir du fichier, lorsqu'une commande pour mettre à jour un fichier sur ledit RAID est émise en sortie depuis un processus exécuté présentement et pour contenir les données lues avant l'opération de mise à jour en association avec un nom de fichier, une position de mise à jour et une dimension de mise à jour sur ledit ordinateur actif en tant que données de restauration de fichier pour restaurer le fichier dans un état au niveau d'un point de contrôle pris le plus récemment ;
un moyen de transfert de données de restauration de fichier (11, 19) pour transférer les données de restauration de fichier contenues audit ordinateur en attente ;
un second moyen de contenance de données de restauration de fichier (19, 18) pour recevoir les données de restauration de fichier transférées et pour contenir les données sur ledit ordinateur en attente ; et
un moyen de processus de point de contrôle (12, 20) pour mettre à l'écart les données de restauration de fichier contenues par lesdits premier et second moyens de contenance de données de restauration de fichier lorsqu'un point de contrôle est pris ; et
comprenant en outre un moyen de restauration de fichier (12, 20) pour restaurer un fichier dans un état au niveau d'un point de contrôle pris le plus récemment sur la base de données de restauration de fichier contenues par ledit premier moyen de contenance de données de restauration de fichier lorsqu'un processus est abandonné et pour mettre à l'écart les données de restauration de fichier contenues par lesdits premier et second moyens de contenance de données de restauration de fichier après que le fichier est restauré.

2. Système selon la revendication 1, comprenant en outre un moyen de restauration de fichier (20) pour restaurer un fichier dans un état au niveau d'un point de contrôle pris le plus récemment sur la base de données de restauration de fichier contenues par ledit second moyen de contenance de données de restauration de fichier (18) lorsque ledit ordinateur actif s'arrête lors de la survenue d'une défaillance de composant matériel ou d'une défaillance de système d'exploitation et pour mettre à l'écart les données de restauration de fichier contenues par ledit second moyen de contenance de données de restauration de fichier après que le fichier est restauré.

3. Système de fichiers selon l'une quelconque des revendications 1 et 2, dans lequel :
ledit premier moyen de contenance de données de restauration de fichier (11) inclut un moyen pour acquérir une dimension d'un fichier contenu sur ledit RAID et soumis à seulement une opération de mise à jour d'annexion lorsqu'un point de contrôle est pris et pour contenir la dimension acquise en tant que données de restauration de fichier pour restaurer le fichier dans un état au niveau d'un point de contrôle pris le plus récemment dans un cas dans lequel l'opération de mise à jour d'annexion est réalisée ;
ledit moyen de transfert de données de restauration de fichier (11, 19) inclut un moyen pour transférer les données de restauration de fichier contenues indicatives de la dimension sur ledit ordinateur d'attente ; et
ledit second moyen de contenance de données de restauration de fichier (18) inclut un moyen pour recevoir les données de restauration de fichier transférées indicatives de la dimension et pour contenir les données sur ledit ordinateur en attente.

4. Système de fichiers selon la revendication 3, comprenant en outre un moyen de restauration de fichier (14, 12) pour remettre à l'état initial une dimension d'un fichier à une dimension au niveau d'un point de contrôle pris le plus récemment sur la base de données de restauration de fichier contenues par ledit premier moyen de contenance de données de restauration de fichier lorsqu'un processus est abandonné.

5. Système selon la revendication 3, comprenant en outre un moyen de restauration de fichier (18, 20) pour remettre à l'état initial une dimension d'un fichier à une dimension au niveau d'un point de contrôle pris le plus récemment sur la base de données de restauration de fichier qui sont contenues par ledit second moyen de contenance de données de restauration de fichier lorsque ledit ordinateur actif s'arrête lors de la survenue d'une défaillance de composant matériel ou d'une défaillance de système d'exploitation.

6. Système selon l'une quelconque des revendications 1 à 5, dans lequel ledit moyen de transfert de données de restauration de fichier comprend un moyen (6, 11) pour arrêter un transfert des données de restauration de fichier indicatives de la dimension sur ledit ordinateur en attente lorsque ledit ordinateur en attente s'arrête lors de la survenue d'une défaillance de composant matériel ou d'une défaillance de système d'exploitation.

7. Système selon la revendication 6, dans lequel :
ledit moyen de transfert de données de restauration de fichier comprend en outre un moyen (3) pour transférer les données de restauration de fichier indicatives de la dimension sur un autre ordinateur qui est autre que lesdits ordinateurs actif et en attente partageant ledit RAID lorsqu'un transfert des données de restauration de fichier sur ledit ordinateur en attente est arrêté ; et
un troisième moyen de contenance de données de restauration de fichier pour recevoir les données de restauration de fichier transférées qui sont indicatives de la dimension et pour contenir les données sur ledit autre ordinateur.

8. Procédé de gestion de fichiers appliqué à un système d'ordinateur jouant le rôle de système d'ordinateur duplex constitué par deux ordinateurs, soit des ordinateurs actif et en attente, partageant un RAID, et comportant une fonction de restauration de défaillance consistant à prendre périodiquement un point de contrôle depuis lequel une exécution d'un processus interrompu est redémarrée, et redémarrant l'exécution du processus interrompu en restaurant ledit système dans un état au niveau d'un point de contrôle pris le plus récemment lors de la survenue d'une défaillance, comprenant :
l'étape de lecture de données avant une opération de mise à jour à partir du fichier lorsqu'une commande pour mettre à jour un fichier sur ledit RAID est émise en sortie depuis un processus exécuté présentement et de contenance des données lues avant l'opération de mise à jour en association avec un nom de fichier, une position de mise à jour et une dimension de mise à jour sur ledit ordinateur actif en tant que données de restauration de fichier pour restaurer le fichier dans un état au niveau d'un point de contrôle pris le plus récemment ;
l'étape de transfert des données de restauration de fichier contenues sur ledit ordinateur en attente ;
l'étape de réception des données de restauration de fichier transférées et de contenance des données sur ledit ordinateur en attente ;
l'étape de mise à l'écart des données de restauration de fichier contenues sur lesdits ordinateurs actif et en attente lorsqu'un point de contrôle est pris ; et
l'étape de restauration du fichier dans un état au niveau d'un point de contrôle pris le plus récemment sur la base des données de restauration de fichier contenues sur ledit ordinateur actif lorsque le processus est abandonné et de mise à l'écart des données de restauration de fichier contenues sur lesdits ordinateurs actif et en attente après que le fichier est restauré.

9. Procédé de gestion de fichiers selon la revendication 8, comprenant :
l'étape de restauration du fichier dans un état au niveau d'un point de contrôle pris le plus récemment sur la base des données de restauration de fichier contenues sur ledit ordinateur en attente lorsque ledit ordinateur actif s'arrête lors de la survenue d'une défaillance de composant matériel ou d'une défaillance de système d'exploitation et de mise à l'écart des données de restauration de fichier contenues sur ledit ordinateur en attente après que le fichier est restauré.

10. Procédé de gestion de fichiers selon la revendication 8, comprenant :
l'étape d'acquisition d'une dimension d'un fichier contenu sur ledit RAID et soumis à seulement une opération de mise à jour d'annexion lorsqu'un point de contrôle est pris et de contenance de la dimension acquise en tant que données de restauration de fichier pour restaurer le fichier dans un état au niveau d'un point de contrôle pris le plus récemment dans un cas dans lequel l'opération de mise à jour d'annexion est réalisée ;
l'étape de transfert des données de restauration de fichier contenues qui sont indicatives de la dimension audit ordinateur en attente ;
l'étape de réception des données de restauration de fichier transférées qui sont indicatives de la dimension et de contenance des données sur ledit ordinateur en attente ; et
l'étape de remise à l'état initial de la dimension du fichier selon une dimension au niveau d'un point de contrôle pris le plus récemment sur la base des données de restauration de fichier indicatives de la dimension contenues sur ledit ordinateur actif lorsque le processus est abandonné.

11. Support d'enregistrement lisible par ordinateur qui stocke un programme qui est appliqué à un système d'ordinateurs jouant le rôle de système d'ordinateurs duplex qui est constitué par deux ordinateurs, soit des ordinateurs actif et en attente, partageant un RAID et présentant une fonction de restauration de défaillance consistant à prendre périodiquement un point de contrôle depuis lequel une exécution d'un processus interrompu est redémarrée, et redémarrant l'exécution du processus interrompu en restaurant ledit système dans un état au niveau d'un point de contrôle pris le plus récemment lors de la survenue d'une défaillance, ledit programme ayant pour effet que ledit système d'ordinateur :
lise des données avant une opération de mise à jour à partir du fichier lorsqu'une commande pour mettre à jour un fichier sur ledit RAID est émise en sortie depuis un processus exécuté présentement et contienne les données lues avant l'opération de mise à jour en association avec un nom de fichier, une position de mise à jour et une dimension de mise à jour sur ledit ordinateur actif en tant que données de restauration de fichier pour restaurer le fichier dans un état au niveau d'un point de contrôle pris le plus récemment ;
transfère les données de restauration de fichier contenues sur ledit ordinateur en attente ;
reçoive les données de restauration de fichier transférées et contienne les données sur ledit ordinateur en attente ;
mette à l'écart les données de restauration de fichier qui sont contenues sur lesdits ordinateurs actif et en attente lorsqu'un point de contrôle est pris ; et
restaure le fichier dans un état au niveau d'un point de contrôle pris le plus récemment sur la base de données de restauration de fichier contenues sur ledit ordinateur actif lorsque le processus est abandonné et mette à l'écart les données de restauration de fichier contenues sur lesdits ordinateurs actif et en attente après que le fichier est restauré.

12. Support d'enregistrement lisible par ordinateur selon la revendication 11, dans lequel :
ledit programme force la restauration du fichier dans un état au niveau d'un point de contrôle pris le plus récemment sur la base de données de restauration de fichier qui sont contenues sur ledit ordinateur en attente lorsque ledit ordinateur actif s'arrête lors de la survenue d'une défaillance de composant matériel ou d'une défaillance de système d'exploitation et met à l'écart les données de restauration de fichier contenues sur ledit ordinateur en attente après que le fichier est restauré.

13. Support d'enregistrement lisible par ordinateur selon la revendication 11, dans lequel ledit programme force ledit système d'ordinateurs à
acquérir une dimension d'un fichier contenu sur ledit RAID et soumis à seulement une opération de mise à jour d'annexion lorsqu'un point de contrôle est pris et à contenir la dimension acquise en tant que données de restauration de fichier pour restaurer le fichier dans un état au niveau d'un point de contrôle pris le plus récemment dans un cas dans lequel l'opération de mise à jour d'annexion est réalisée ;
transférer les données de restauration de fichier contenues indicatives de la dimension audit ordinateur en attente ;
recevoir les données de restauration de fichier transférées indicatives de la dimension et contenir les données sur ledit ordinateur d'attente ; et
restaurer la dimension du fichier à une dimension au niveau d'un point de contrôle pris le plus récemment sur la base de données de restauration de fichier indicatives de la dimension contenues sur ledit ordinateur actif lorsque le processus est abandonné.

14. Support d'enregistrement lisible par ordinateur selon la revendication 13, dans lequel :
ledit programme force ledit système d'ordinateurs à remettre à l'état initial la dimension du fichier à une dimension au niveau d'un point de contrôle pris le plus récemment sur la base de données de restauration de fichier indicatives de la dimension contenues sur ledit ordinateur en attente lorsque ledit ordinateur actif s'arrête lors de la survenue d'une défaillance de composant matériel ou d'une défaillance de système d'exploitation.
